# EUROPEAN PATENT APPLICATION

(11) **EP 3 351 404 A1**
(43) Date of publication of application: **25.07.2018**
(21) Application number: 17160976.1
(22) Date of filing: 15.03.2017
(51) Int. Cl.: B60B 33/04, B60B 33/06, B60B 33/00

(54) **ROLLER COMPONENT AND SUITCASE**

(30) Priority: 20.01.2017 CN 201710046320
(71) Applicant: Chu, Wai Ho, Kwai Chung, N.T. (HK)
(72) Inventor: Chu, Wai Ho, Kwai Chung, N.T. (HK)
(74) Representative: Cabinet Chaillot

(57) **Abstract**

The present invention relates to a roller component having a suspension (10) and a roller mounting rack (50). One end of the roller mounting rack has a cavity (51) and is disposed inside the suspension in a sleeved manner. An articulated shaft (40) is located inside the cavity. Two ends of the articulated shaft respectively pass through corresponding inner wall of the cavity and are connected to the suspension to make the roller mounting rack connected to the suspension in an articulated manner; a spring (60) in a pre-compressed state is embedded in the cavity, and sleeved on the articulated shaft; the other end of the roller mounting rack is intended to mount a roller (70). The present invention plays a buffering and cushioning role to the roller and can raise the contact area and adhesive force of the roller with the ground surface and make the roller cling to the ground and move steadily.

## Description

### [TECHNICAL FIELD]

The present invention relates to a roller component, particularly to a roller component and a suitcase using this roller component.

### [BACKGROUND]

When a current roller used in a suitcase moves at an angle with the ground surface or moves on an upslope or on an uneven road surface, the adhesive force between the roller and the ground surface is very small and the roller is liable to inclination and disengagement from the ground surface, thereby being liable to rollover or tip-over, causing inconvenience of users.

### [SUMMARY OF THE INVENTION]

The object of the present invention is to overcome the defect of the prior art and to provide a roller component and a suitcase.

The present invention provides a roller component, comprising a suspension and a roller mounting rack. One end of the roller mounting rack has a cavity and is disposed inside the suspension in a sleeved manner. An articulated shaft is located inside the cavity. Two ends of the articulated shaft respectively pass through corresponding inner wall of the cavity and are connected to the suspension to make the roller mounting rack connected to the suspension in an articulated manner; a spring in a pre-compressed state is embedded in the cavity, and sleeved on the articulated shaft; the other end of the roller mounting rack is intended to mount a roller.

Preferably, the bottom surface of the cavity is an inclined plane.

Preferably, the spring is a torsional spring. Two torsion beams at two ends of the torsional spring are on a same side, one of the torsion beams is in parallel with horizontal plane, and the other torsion beam is in parallel with the inclined plane.

Preferably, the torsion beam in parallel with horizontal plane is above the torsion beam in parallel with the inclined plane.

Preferably, the suspension has a mounting chamber, one end of the roller mounting rack is disposed inside the mounting chamber in a sleeved manner and has an oblique plane, and the oblique plane is on a side of the cavity farther from the two torsion beams at two ends of the torsional spring.

Preferably, the oblique plane is in parallel with the inclined plane.

Preferably, a cushion is disposed at a location of the bottom surface of the mounting chamber corresponding to the oblique plane.

Preferably, a housing is further comprised, and the suspension is mounted to the housing through a spindle in a rotatable manner.

Preferably, the suspension has a containing chamber, the housing has a convex portion, and the convex portion is sleeved on the spindle and located inside the containing chamber; a bearing is disposed between the convex portion and the inner wall of the containing chamber.

The present invention also provides a suitcase, comprising a body. The body comprises a body frame, and further comprises any of the foregoing roller components. The roller component is mounted on the body frame.

In respect to the roller component and suitcase provided by the present invention, when the roller receives excessive pressure from suitcase load or is collided with an obstacle, it will make the roller mounting rack rotate by a certain angle, while the spring will generate a push-back force on the roller mounting rack to stop rotation of the roller mounting rack, alleviate the impact of the roller, play a buffering and cushioning role to the roller, push the roller down, keep it in a state of contact with ground surface, raise the contact area and adhesive force of the roller with the ground surface, and realize stable movement of the roller.

### [BRIEF DESCRIPTION OF THE DRAWINGS]

FIG. 1 is an exploded view of a roller component provided by the present invention.
FIG. 2 is a section view of the roller component shown in FIG. 1 and partial body of a suitcase.

### [DETAILED DESCRIPTION OF PREFERRED EMBODIMENTS]

Below the present invention will be further described by referring to accompanying drawings and embodiments.

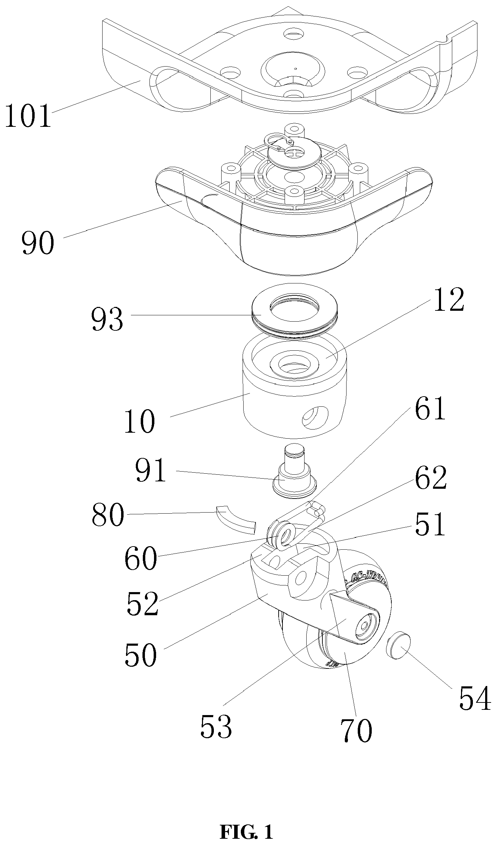

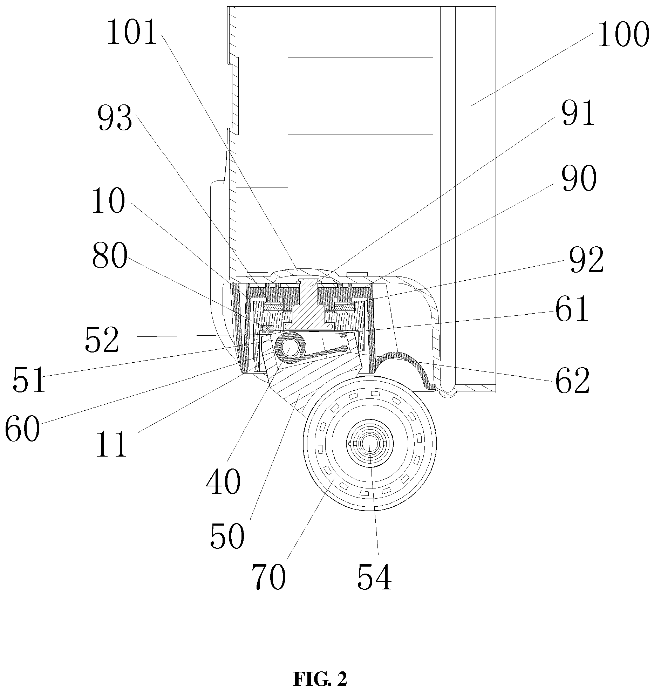

As shown in FIG. 1 and FIG. 2, the present invention provides a roller component, comprising a suspension 10, a roller mounting rack 50 and a housing 90. The bottom of the suspension 10 has a mounting chamber 11. The top of the roller mounting rack 50 has a cavity 51 and is disposed inside the mounting chamber 11 in a sleeved manner. An articulated shaft 40 is located inside the cavity 51. Two ends of the articulated shaft 40 respectively pass through corresponding inner wall of the cavity 51 and are connected to the suspension 10 to make the roller mounting rack 50 connected to the suspension 10 in an articulated manner. The articulated shaft 40 is located on one inner side of the cavity 51. A spring 60 in a pre-compressed state is embedded in the cavity 51, and sleeved on the articulated shaft 40. Mounting pieces 53 are disposed on two opposite sides of the bottom of the roller mounting rack 50. A roller 70 is mounted between the two mounting pieces 53 through a wheel axle. Wheel axle caps 54 are disposed at two ends of the wheel axle. When the roller 70 receives excessive pressure from suitcase load or is collided with an obstacle, it will make roller mounting rack 50 rotate by a certain angle under the action of excessive pressure or force of percussion, while the spring 60 will generate a push-back force on the roller mounting rack 50 to stop the rotation of the roller mounting rack 50, alleviate the impact of the roller 70, play a buffering and cushioning role to the roller 70, push the roller 70 down, keep it in a state of contact with the ground surface, raise the contact area and adhesive force of the roller 70 with the ground surface, effectively prevent the roller 70 from leaving the ground surface and realize stable movement of the roller 70.

The bottom surface of the cavity 51 is an inclined plane. The spring 60 is a torsional spring. Two torsion beams 61, 62 at two ends of the torsional spring are on a same side. The ends of the two torsion beams 61, 62 are one an inner side of the cavity 51 farther from the articulated shaft 40. Torsion beam 61 is in parallel with the horizontal plane, and torsion beam 62 is in parallel with the inclined plane. The torsion beam 61 in parallel with the horizontal plane is above the torsion beam 62 in parallel with the inclined plane. The ends of the two torsion beams 61, 62 overlap with each other. This design can raise the push-back force of the spring 60 on the roller mounting rack 50, further alleviate the impact force of the roller, and make the roller 70 be pushed down and cling to the ground surface.

The top of the roller mounting rack 50 has an oblique plane 52. The oblique plane 52 is on a side of the cavity 51 farther from two torsion beams 61, 62 at two ends of the torsional spring. The oblique plane 52 is in parallel with the inclined plane. When the roller 70 receives excessive pressure from suitcase load or is collided with an obstacle, the spring 60 may be excessively compressed to generate a push-back force on the roller mounting rack 50. As a result, the roller mounting rack 50 generates a large force of percussion on the suspension 10 and the two are damaged. The design of the oblique plane 52 helps alleviate the force of percussion of the roller mounting rack 50 on the suspension 10 and plays a role in protecting the roller mounting rack 50 and the suspension 10. A cushion 80 is disposed at a location of the bottom surface of the mounting chamber 11 corresponding to the oblique plane 52 and plays a buffering and protecting role. The shape of the cushion 80 corresponds to the shape of the roller mounting rack 50, is preferably arc.

Two opposite sides of corresponding oblique plane 52 of the roller mounting rack 50 are inclined. This design helps buffer push-back force when the spring 60 generates a large push-back force on the roller mounting rack 50.

The housing 90 is intended to be mounted to a body 100 of a suitcase. To be specific, the housing 90 is mounted onto a body frame 101 of the body 100 through screw. A suspension 10 is mounted to the housing 90 through a spindle 91 in a rotatable manner, so it may rotate relative to the housing 90 by 360 degrees, thereby making the roller 70 rotatable by 360 degrees. One end of the spindle 91 is mounted inside the suspension 10 and adjacent to the spring 60, and the other end is mounted inside the housing 90. The spindle 91 preferably is a stepped shaft. Of course, the spindle 91 may also be a spindle 91 in another shape. There is no limitation to the shape of the spindle 91.

The top of the suspension 10 has a containing chamber 12. The bottom of the housing 90 has a convex portion 92. The convex portion 92 is sleeved on the spindle 91 and located inside the containing chamber 12. A bearing 93 is disposed between the convex portion 92 and the inner wall of the containing chamber 12. When the suspension 10 rotates, it may reduce friction between the suspension 10 and the housing 90. Alternatively, the bearing 93 may be replaced with other buffer materials.

Also as shown in FIG. 2, the present invention further provides a suitcase, comprising a body 100 and the foregoing roller component. The body 100 comprises a body frame 101. The roller component is mounted on the body frame 101. Two torsion beams 61, 62 of a torsional spring disposed by the roller mounting rack 50 of the roller component face the front of the body 100. The use of this roller component may play a buffering and cushioning role and make the suitcase move steadily and not turn or tip over.

The foregoing embodiments only represent the preferred embodiments of the present invention. Their descriptions are concrete and detailed, but they shall not be therefore understood as limitations to the scope of the present invention patent. It shall be noted that for those skilled in the art, various changes and modifications may be made to the embodiments without departing from the spirit of the present invention, such as: combinations of different features of the embodiments. All these shall be in the protective scope of the present invention.

## Claims

1. A roller component, comprising a suspension and a roller mounting rack, wherein one end of the roller mounting rack has a cavity and is disposed inside the suspension in a sleeved manner; an articulated shaft being located inside the cavity; two ends of the articulated shaft respectively passing through corresponding inner wall of the cavity and being connected to the suspension to make the roller mounting rack connected to the suspension in an articulated manner; a spring in a pre-compressed state being embedded in the cavity, and sleeved on the articulated shaft; the other end of the roller mounting rack being intended to mount a roller.

2. The roller component according to claim 1, wherein bottom surface of the cavity is an inclined plane.

3. The roller component according to claim 2, wherein the spring is a torsional spring; two torsion beams at two ends of the torsional spring being on a same side; one of the torsion beams being in parallel with horizontal plane, and the other torsion beam being in parallel with the inclined plane.

4. The roller component according to claim 3, wherein the torsion beam in parallel with horizontal plane is above the torsion beam in parallel with the inclined plane.

5. The roller component according to claim 3, wherein the suspension has a mounting chamber; one end of the roller mounting rack being disposed inside the mounting chamber in a sleeved manner and having an oblique plane; the oblique plane being on a side of the cavity farther from the two torsion beams at the two ends of the torsional spring.

6. The roller component according to claim 5, wherein the oblique plane is in parallel with the inclined plane.

7. The roller component according to claim 5, wherein a cushion is disposed at a location of bottom surface of the mounting chamber corresponding to the oblique plane.

8. The roller component according to claim 1 further comprising a housing; the suspension being mounted to the housing through a spindle in a rotatable manner.

9. The roller component according to claim 8, wherein the suspension has a containing chamber; the housing having a convex portion; the convex portion being sleeved on the spindle and located inside the containing chamber; a bearing being disposed between the convex portion and inner wall of the containing chamber.

10. A suitcase comprising a body, the body comprising a body frame, wherein the suitcase further comprises any of the roller components of claims 1-9; the roller component being mounted on the body frame.
